# EUROPEAN PATENT SPECIFICATION

(11) **EP 1 534 816 B1**
(45) Date of publication and mention of the grant of the patent: **05.04.2006**
(21) Application number: 03793860.2
(22) Date of filing: 29.08.2003
(51) Int. Cl.: C12H 1/16

(54) **METHOD AND APPARATUS FOR PRESERVING THE CONTENTS OF BEVERAGE CONTAINERS**
VERFAHREN UND ANLAGE ZUR KONSERVIERUNG DER INHALTE VON GETRÄNKEBEHÄLTERN
PROCEDE ET APPAREIL POUR CONSERVER LE CONTENU DE RECIPIENTS POUR BOISSONS

(30) Priority: 04.09.2002 GB 0220531
(43) Date of publication of application: 01.06.2005
(73) Proprietor: Bermar International Limited, Ipswich, Suffolk IP5 3RG (GB)
(72) Inventor: BERRESFROD, Richard, c/o Bermar (Internat.) Ltd, Ipswich, Suffolk IP5 3RG (GB); MARR, David Thomas, c/o Bermar (Internat.) Ltd, Ipswich Suffolf IP5 3RG (GB)
(74) Representative: Johnson, Terence Leslie
(86) International application number: PCT/GB2003/003757
(87) International publication number: WO 2004/022695

(56) References cited:
- DE-A- 3 742 433
- FR-A- 2 526 762
- FR-A- 2 601 962
- FR-A- 2 819 687
- US-A- 4 475 576
- DATABASE WPI Section PQ, Week 200221 Derwent Publications Ltd., London, GB; Class P28, AN 2002-159964 XP002260002 & JP 2001 354206 A (SANDEN CORP), 25 December 2001 (2001-12-25)

## Description

This invention relates to preservation of the contents of beverage containers, in particular to preserving the contents of still and sparkling wine bottles once some of the wine has been removed. However, the invention can equally well be used with other beverages and other type of containers, for example wine barrels.

It is known to preserve still wine in wine bottles by evacuating the air space above the liquid once some of the wine has been consumed. It is also known to preserve sparkling wine in wine bottles by pumping air or carbon dioxide into the bottle to prevent the wine from losing its sparkle.

Japanese Patent Abstract JP2001354206 discloses an apparatus for extracting and supplying gas from and to a beverage container, respectively.

However, a problem with such known systems is that the residual air (and hence oxygen) in the bottle allows some oxidation of the contents to occur. Furthermore, some beverages may deteriorate if kept at a sub atmospheric pressure for a sufficient length of time.

This invention seeks to reduce the amount of residual oxygen in a beverage container in order to increase the length of time for which a preserved beverage may be stored, and seeks to avoid the need to store a beverage at a sub atmospheric pressure.

In its broadest aspect, the invention provides apparatus for preserving the contents of a part filled container, the apparatus comprising a stopper with a bi-directional valve, adapted to be removably fitted in an aperture of the container; means for extracting a gas from the container, through the valve in the stopper; and means for introducing a gas into the container, through the valve in the stopper.

The invention also provides an apparatus for preserving the contents of a part filled container, the apparatus comprising a bi-directional valved stopper, adapted to be removably fitted in an aperture of the container; a vacuum source communicating with a socket of the apparatus via a first pneumatic circuit, the socket being adapted to form a seal with the stopper, the vacuum source being arranged, in operation, to remove gas from the container via the stopper to create a sub atmospheric pressure inside the container; means for disconnecting the vacuum source once a first predetermined pressure has been achieved inside the container; an inert gas source communicating with the socket via a second pneumatic circuit, the inert gas source being arranged to supply inert gas into the container via the stopper once the vacuum source has been disconnected; and means for ceasing the supply of inert gas once a second predetermined pressure has been achieved inside the container.

The vacuum source is preferably a vacuum pump, and the means for disconnecting the vacuum source may comprise a switch which switches off and stops operation of the pump.

By replacing air, and its oxygen content with an inert gas in a part filled container it is possible to slow the rate of oxidation and hence deterioration of the contents. As the percentage of oxygen in air is known (approximately 18%) and the percentage of remaining air/gas at the first predetermined pressure is known, it is possible to quantify the residual oxygen content after a cycle of removal of gas followed by supply of the inert gas. Two or more cycles may be completed in order to further dilute the residual oxygen content and therefore further increase the possible period of preservation. Alternatively the level of vacuum (ie the first predetermined pressure) may be increased with the same result.

In the preferred embodiment of the invention the bi-directional valved stopper is a stopper incorporating a flutter valve. The flutter valve is preferably arranged, once a cycle is complete, to retain a small residual pressure differential between the atmosphere inside the container and the ambient atmosphere outside.

In the case of still beverages, the pressure inside the bottle will be slightly superatmospheric, so that the slight residual pressure prevents the ingress of air if the container (for example a bottle) is cooled or refrigerated. In other embodiments the stopper could incorporate two non return valves which operate to prevent flow in different directions, for example.

For the preservation of sparkling beverages it is desirable to apply a superatmospheric pressure to the part filled container in order to prevent the beverage from losing its sparkle. This can be done after replacing air and its oxygen content with an inert gas, thus ensuring that the beverage neither oxidises nor loses its effervescence.

Therefore, for preservation of sparkling beverages the apparatus further comprises a second gas source communicating with a socket, the second gas source being arranged, in operation, to supply gas into the container via the stopper; and means for ceasing the supply of the gas once a third predetermined pressure is reached.

It would be possible for the two operations, i.e. the replacement of residual oxygen by an inert gas, and the application of a head pressure to be carried out via the same socket. However, for ease of use by bar staff, in the preferred embodiment there are two sockets one for the replacement of residual oxygen by an inert gas, and a second for the application of a head pressure from a second gas source.

Before offering a sparkling beverage container to the socket for application of the head pressure it is preferable if a second stopper (designed to fit snugly over the first stopper) is fitted. The second stopper has a retention device to stop it from being blown apart from the first stopper, and a non return valve to allow the head pressure to be applied and retained.

Argon is a preferred inert gas, because argon is particularly effective for inhibiting the evaporation of any dissolved oxygen present in a liquid in the part filled container. Carbon dioxide is preferred as the gas for creating the head pressure. It would also be possible to use carbon dioxide as the inert gas so that only a single gas supply is required.

Preferably, the means for stopping the pump from pumping through the valve is also arranged to activate the supply of inert gas. The means for stopping the pump from pumping through the valve and for ceasing the supply of the inert gas or the head pressure gas are conveniently implemented by the use of pressure sensitive switches located in the appropriate pneumatic circuit, and arranged to operate once the appropriate sub atmospheric or super atmospheric pressure is reached.

Such switches may be arranged to actually stop the pump or supply or they may be arranged to close a valve in the appropriate pneumatic circuit, or both.

Part of the or each socket can be spring loaded relative to a switch which starts the pump operation or the supply of the second gas so that the socket can be displaced by offering the container to the socket, causing the switch to operate.

According to a second aspect of the invention there is also provided a method for the preservation of the contents of a part filled beverage container, comprising the steps of removing gas from the container until a first predetermined pressure is achieved; and supplying an inert gas to the container until a second predetermined pressure is achieved.

The above steps may be performed a number of times in order to repeatedly dilute the amount of residual oxygen remaining in the part filled beverage container.

This method may be used for the preservation of sparkling beverages by including the further step of supplying a gas under pressure to the container until a third predetermined pressure is reached.

According to another aspect of the invention, there is provided a stopper for a wine bottle, the stopper having a skirt to seal against the neck of a wine bottle and a bi-directional valve which can open to allow flow through the stopper in either direction when a pressure differential above a threshold level is applied in either direction across the stopper, and which remains closed when a pressure differential below said threshold is applied.

The bi-directional valve is preferably a flutter valve and the stopper is preferably a one-piece moulded product of an elastomer material, with the lips of the flutter valve being integral with the stopper.

The invention is particularly intended for and adapted to the preservation of wine contained in conventional glass bottles, and may be installed behind a bar where a selection of wines is available for sale. It is simple for a bar tender to dispense one glassful from a part-consumed bottle, to insert the stopper and offer the bottle up to the apparatus so that the air in the headspace, and its oxygen content, can be evacuated from the bottle.

Stoppers may be used which are colour coded to indicate the ideal frequency for the replacement of residual oxygen by an inert gas to be performed, in dependence upon the expected turnover of the particular product. For example, black may indicate a fast moving product which requires the operation to be performed once at the end of service. Silver may indicate a product which requires the operation to be performed once after each glass of wine is served, and gold may be used to indicate a product which requires the operation to be performed twice after each glass of wine is served.

Embodiments of the invention will now be described, by way of example only, with reference to the accompanying drawings in which
Figure 1 illustrates an apparatus according to the present invention;
Figure 2 illustrates a stopper for use in the present invention; and
Figure 3 illustrates a retaining device for use with the present invention.

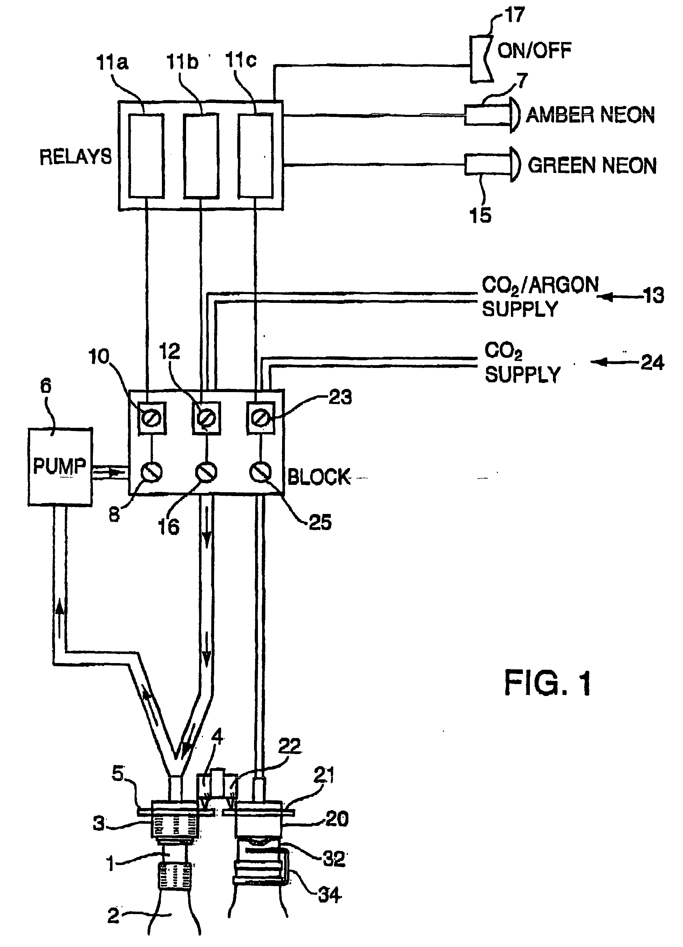

Figure 1 illustrates a schematic view of one embodiment of the present invention. The apparatus is set to a ready condition using a switch 17. A wine bottle 2, from which a glass of wine has been dispensed, is closed with a reusable bi-directionally valved stopper 1 which is inserted into the mouth of the bottle 2. The bottle and stopper are then offered up to a socket 3. The socket is connected to a strike plate 5 for operating a switch 4. The strike plate 5 is biased such that a switch 4 is usually in the off position. Upward pressure on the strike plate 5 triggers the switch 4, which causes a vacuum pump 6 to operate and an amber neon bulb 7 to be illuminated. The vacuum pump 6 serves to withdraw air from the headspace of the part filled bottle 2 through the stopper 1 via a first pneumatic circuit.

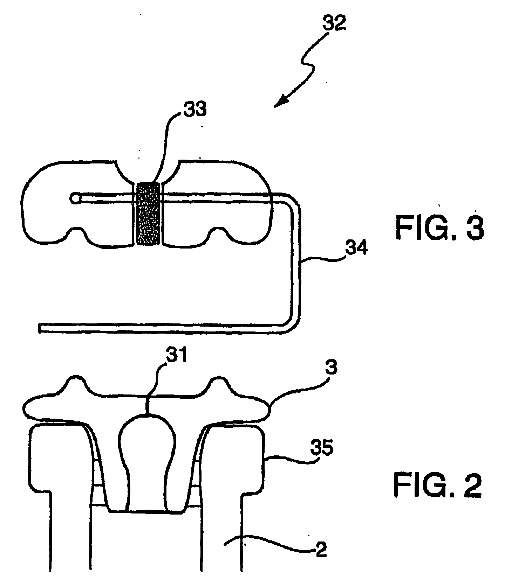

The stopper 1 incorporates a flutter valve (see Figure 2). This valve will retain a small pressure differential between its two sides (eg 0.1 - 0.15 bar), irrespective of which side is at a higher pressure and which side is at a lower pressure. The valve will however open to allow flow from one side to the other when a pressure differential above a certain level is applied across the valve.

A pressure sensor B is arranged to detect a first predetermined pressure, which is a subatmospheric pressure. Once this first predetermined pressure is achieved and detected by the sensor 8 a solenoid valve 10 is caused to operate to close the first pneumatic circuit. Relays 11a, 11b, 11c serve to turn off the pump 6 and to open a second solenoid valve 12 in a second pneumatic circuit. Argon is supplied from a remote source 13 (not shown) via the socket 3 and the stopper 1. In this embodiment of the invention argon is pumped through the second pneumatic circuit, although it would be possible to allow the argon to be drawn through the circuit by the pressure differential which has been created.

A second pressure sensor 16 is arranged to detect when a second predetermined pressure has been achieved. This second predetermined pressure is just above atmospheric pressure, for example 1.1 to 1.2 bar. Once the second predetermined pressure is achieved the relays 11a, 11b, 11c serve to close the solenoid valve 12, which closes the second pneumatic circuit and cuts off the supply of argon. The amber neon bulb 7 then goes out and a green neon bulb 15 lights up to indicate operation complete.

In the event that the supply of argon is exhausted the second pressure sensor 16 does not operate and the green neon bulb 15 does not light up. The operator will then know that the operation has not been properly completed.

Removing the bottle 2 causes the switch 4. to return to the off position. The green neon bulb 15 goes out and the apparatus is reset and ready for the next operation.

When the stopper is removed to allow more of the container contents to be dispensed, there will be a small rush of gas out of the container.

The flutter valve 31 (Figure 2) is preferably arranged to open inwardly at pressures of 1 ± 0.15 bar and outwardly at ≤ 1 bar.

Figure 3 illustrates a second stopper 32 which is adapted to fit snugly over the bi-directionally valved stopper 3. The second stopper 32 has a non return valve 33 and a retaining clip 34 which is designed to engage under the neck 35 of a bottle 2.

This stopper is to be used in a second operation to be carried out for the preservation of sparkling wines, which will now be described with reference once more to Figure 1.

The stopper 32 is secured over the bi-directionally valved stopper 3. The bottle and stopper are offered up to a second socket 20, which utilises a strike plate 21 and a switch 22 in a similar manner to that described previously.

Activating the switch 22 causes the relays 11a, 11b, 11c, to open a solenoid valve 23 allowing carbon dioxide to be supplied via the socket 20 and the stoppers 3, 32. The amber neon bulb 7 lights, up. Carbon dioxide is supplied from a remote source 24 (not shown) and is pumped into the bottle 2, via a third pneumatic circuit until a third pressure sensor 25 detects that a third predetermined pressure has been achieved.

Once the third predetermined pressure is achieved the relays 11a, 11b, 11c, serve to close the solenoid valve 23, closing the third pneumatic circuit and cutting of the supply of carbon dioxide. The amber neon bulb 7 goes out and the green neon bulb 15 lights up.

Similarly to the previous case, in the event that the supply of carbon dioxide is exhausted the pressure sensor 25 does not operate and the green neon bulb 15 does not light up.

Removing the bottle 2 causes the switch 22 to return to the off position. The green neon bulb 15 goes out and the apparatus is reset.

## Claims

1. Apparatus for preserving the contents of a part filled container, the apparatus comprising
a stopper with a bi-directional valve, adapted to be removably fitted in an aperture of the container;
means for extracting a gas from the container, through the valve in the stopper; and
means for introducing a gas into the container, through the valve in the stopper.

2. Apparatus for preserving the contents of a part filled container, the apparatus comprising
a bi-directional valved stopper, adapted to be removably fitted in an aperture of the container;
a vacuum source communicating with a socket of the apparatus via a first pneumatic circuit, the socket being adapted to form a seal with the stopper, the vacuum source being arranged, in operation, to remove gas from the container via the stopper to create a sub atmospheric pressure inside the container;
means for disconnecting the vacuum source once a first predetermined pressure has been achieved inside the container;
an inert gas source communicating with the socket via a second pneumatic circuit, the inert gas source being arranged to supply inert gas into the container via the stopper once the vacuum source has been disconnected; and
means for ceasing the supply of inert gas once a second predetermined pressure has been achieved inside the container.

3. Apparatus as claimed in Claim 2, wherein the vacuum source is a vacuum pump, and the means for disconnecting the vacuum source comprises a switch which switches off and stops operation of the pump.

4. Apparatus according to Claim 2 or Claim 3, in which the bi-directional valved stopper is a stopper incorporating a flutter valve.

5. Apparatus according to any one of Claims 2 to 4, further comprising
a second gas source communicating with a socket, the second gas source being arranged, in operation, to supply a second gas into the container via the stopper; and
means for ceasing the supply of the second gas once a third predetermined pressure is reached.

6. Apparatus according to Claim 5, further comprising a second stopper adapted to fit over the bi-directional valved stopper, the second stopper having a non return valve and a retention device.

7. Apparatus according to any one of Claims 2 to 6, in which the inert gas is argon.

8. Apparatus according to any one of Claims 2 to 7, in which the means for stopping the pump is arranged to activate the supply of inert gas.

9. Apparatus according to any one of Claims 2 to 8, further comprising a switch biased in the off position by a spring which is in communication with a socket and in which the socket can be displaced against the action of the spring by introduction of the container having the stopper fitted in an aperture, and wherein the displacement of the socket operates the switch to start the pump pumping through the valve.

10. Apparatus according to any one of Claims 2 to 9, further comprising a switch biased in the off position by a spring which is in communication with a socket and in which the socket can be displaced against the action of the spring by introduction of the container having the stopper fitted in an aperture, and wherein the displacement of the socket operates the switch to start the supply of the second gas.

11. A method for the preservation of the contents of a part filled beverage container, comprising the steps of
removing gas from the container until a first predetermined pressure is achieved; and
supplying an inert gas to the container until a second predetermined pressure is achieved.

12. A method according to Claim 11, further comprising the step of supplying a second gas to the container until a third predetermined pressure is reached.

13. A stopper for a wine bottle, the stopper having a skirt to seal against the neck of a wine bottle and a bi-directional valve which can open to allow flow through the stopper in either direction when a pressure differential above a threshold level is applied in either direction across the stopper, and which remains closed when a pressure differential below said threshold is applied.

14. A stopper as claimed in Claim 13, wherein the bi-directional valve is a flutter valve.

## Patentansprüche

1. Vorrichtung für das Aufbewahren des Inhaltes eines teilweise gefüllten Behälters, wobei die Vorrichtung aufweist:
einen Verschluss mit einem in zwei Richtungen wirkenden Ventil, der so ausgeführt ist, dass er entfernbar in einer Öffnung des Behälters angebracht werden kann;
Mittel für das Herausziehen eines Gases aus dem Behälter durch das Ventil im Verschluss; und
Mittel für das Einführen eines Gases in den Behälter durch das Ventil im Verschluss.

2. Vorrichtung für das Aufbewahren des Inhaltes eines teilweise gefüllten Behälters, wobei die Vorrichtung aufweist:
einen Verschluss mit einem in zwei Richtungen wirkenden Ventil, der so ausgeführt ist, dass er entfembar in einer Öffnung des Behälters angebracht werden kann;
eine Vakuumquelle, die mit einer Aufnahme der Vorrichtung mittels eines ersten pneumatischen Kreislaufes in Verbindung steht, wobei die Aufnahme so ausgeführt ist, dass sie eine Dichtung mit dem Verschluss bildet, wobei die Vakuumquelle angeordnet ist, um beim Betrieb Gas aus dem Behälter über den Verschluss zu entfernen, um innerhalb des Behälters einen unteratmosphärischen Druck zu erzeugen;
Mittel für das Abschalten der Vakuumquelle, sobald ein erster vorgegebener Druck im Inneren des Behälters erreicht wurde;
eine Inertgasquelle, die mit der Aufnahme mittels eines zweiten pneumatischen Kreislaufes in Verbindung steht, wobei die Inertgasquelle angeordnet ist, um Inertgas in den Behälter über den Verschluss zuzuführen, sobald die Vakuumquelle abgeschaltet wurde; und
Mittel für das Unterbrechen der Zuführung des Inertgases, sobald ein zweiter vorgegebener Druck im Inneren des Behälters erreicht wurde.

3. Vorrichtung nach Anspruch 2, bei der die Vakuumquelle eine Vakuumpumpe ist und die Mittel für das Abschalten der Vakuumquelle einen Schalter aufweisen, der die Pumpe abschaltet und deren Betrieb zum Stillstand bringt.

4. Vorrichtung nach Anspruch 2 oder Anspruch 3, bei der der Verschluss mit einem in zwei Richtungen wirkenden Ventil ein Verschluss ist, der ein Flatterventil enthält.

5. Vorrichtung nach einem der Ansprüche 2 bis 4, die außerdem aufweist:
eine zweite Gasquelle, die mit einer Aufnahme in Verbindung steht, wobei die zweite Gasquelle angeordnet ist, um beim Betrieb ein zweites Gas in den Behälter über den Verschluss zuzuführen; und
Mittel für das Unterbrechen der Zuführung des zweiten Gases, sobald ein dritter vorgegebener Druck erreicht ist.

6. Vorrichtung nach Anspruch 5, die außerdem einen zweiten Verschluss aufweist, der so ausgeführt ist, dass er über den Verschluss mit einem in zwei Richtungen wirkenden Ventil angebracht wird, wobei der zweite Verschluss ein Rückschlagventil und eine Arretiervorrichtung aufweist.

7. Vorrichtung nach einem der Ansprüche 2 bis 6, bei der das Inertgas Argon ist.

8. Vorrichtung nach einem der Ansprüche 2 bis 7, bei der die Mittel für das Unterbrechen der Pumpe ausgeführt sind, um die Zuführung von Inertgas zu aktivieren.

9. Vorrichtung nach einem der Ansprüche 2 bis 8, die außerdem einen Schalter aufweist, der mittels einer Feder in der Aus-Stellung vorgespannt ist, die mit einer Aufnahme in Verbindung ist, und in der die Aufnahme gegen die Wirkung der Feder verschoben werden kann, indem der Behälter mit dem in einer Öffnung angebrachten Verschluss eingeführt wird, und bei der die Verschiebung der Aufnahme den Schalter betätigt, um das Pumpen der Pumpe durch das Ventil zu beginnen.

10. Vorrichtung nach einem der Ansprüche 2 bis 9, die außerdem einen Schalter aufweist, der mittels einer Feder in der Aus-Stellung vorgespannt ist, die mit einer Aufnahme in Verbindung ist, und in der die Aufnahme gegen die Wirkung der Feder verschoben werden kann, indem der Behälter mit dem in einer Öffnung angebrachten Verschluss eingeführt wird, und bei der die Verschiebung der Aufnahme den Schalter betätigt, um die Zuführung des zweiten Gases zu beginnen.

11. Verfahren zum Aufbewahren des Inhaltes eines teilweise gefüllten Getränkebehälters, das die folgenden Schritte aufweist:
Entfernen von Gas aus dem Behälter, bis ein erster vorgegebener Druck erreicht ist; und
Zuführen eines Inertgases zum Behälter, bis ein zweiter vorgegebener Druck erreicht ist.

12. Verfahren nach Anspruch 11, das außerdem den Schritt des Zuführens eines zweiten Gases zum Behälter aufwesit, bis ein dritter vorgegebener Druck erreicht ist.

13. Verschluss für eine Weinflasche, wobei der Verschluss eine Einfassung, um gegen den Hals einer Weinflasche abzudichten, und ein in zwei Richtungen wirkendes Ventil aufweist, das sich öffnen kann, um den Fluss durch den Verschluss in beiden Richtungen zu gestatten, wenn eine Druckdifferenz über einem Grenzpegel in beliebiger Richtungen über dem Verschluss anliegt, und der geschlossen bleibt, wenn eine Druckdifferenz unterhalb des Grenzpegels anliegt.

14. Verschluss nach Anspruch 13, bei der das in zwei Richtungen wirkende Ventil ein Flatterventil ist.

## Revendications

1. Dispositif pour préserver le contenu d'un récipient partiellement rempli, le dispositif comprenant:
un bouchon avec une soupape bidirectionnelle, destiné à être agencé de manière amovible dans une ouverture du récipient ;
un moyen pour extraire un gaz du récipient, à travers la soupape dans le bouchon ; et
un moyen pour introduire un gaz dans le récipient, à travers la soupape dans le bouchon.

2. Dispositif destiné à préserver le contenu d'un récipient partiellement rempli, le dispositif comprenant :
un bouchon à soupape bidirectionnelle, destiné à être agencé de manière amovible dans une ouverture du récipient ;
une source de vide communiquant avec une douille du dispositif à travers un premier circuit pneumatique, la douille étant destinée à établir un joint avec le bouchon, la source de vide étant destinée à retirer en service le gaz du récipient à travers le bouchon pour établir une pression subatmosphérique dans le récipient ;
un moyen pour déconnecter la source de vide après l'établissement d'une première pression prédéterminée dans le récipient ;
une source de gaz inerte, communiquant avec la douille à travers un deuxième circuit pneumatique, la source de gaz inerte étant destinée à amener du gaz inerte dans le récipient à travers le bouchon après la déconnexion de la source de vide ; et
un moyen pour arrêter l'alimentation du gaz inerte après l'établissement d'une deuxième pression prédéterminée dans le récipient.

3. Dispositif selon la revendication 2, dans lequel la source de vide est constituée par une pompe à vide, le moyen de déconnexion de la source de vide comprenant un commutateur débranchant la pompe et arrêtant le fonctionnement de celle-ci.

4. Dispositif selon les revendications 2 ou 3, dans lequel le bouchon à soupape bidirectionnelle est un bouchon incorporant une soupape à flottement.

5. Dispositif selon l'une quelconque des revendications 2 à 4, comprenant en outre :
une deuxième source de gaz communiquant avec une douille, la deuxième source de gaz étant destinée à amener en service un deuxième gaz dans le récipient à travers le bouchon ; et
un moyen pour arrêter l'alimentation du deuxième gaz après l'établissement d'une troisième pression prédéterminée.

6. Dispositif selon la revendication 5, comprenant en outre un deuxième bouchon destiné à être ajusté au-dessus du bouchon à soupape bidirectionnelle, le deuxième bouchon comportant une soupape d'arrêt et un dispositif de retenue.

7. Dispositif selon l'une quelconque des revendications 2 à 6, dans lequel le gaz inerte est de l'argon.

8. Dispositif selon l'une quelconque des revendications 2 à 7, dans lequel le moyen destiné à arrêter la pompe est destiné à actionner l'alimentation du gaz inerte.

9. Dispositif selon l'une quelconque des revendications 2 à 8, comprenant en outre un commutateur poussée dans la position débranchée par un ressort en communication avec une douille, la douille pouvant être déplacée contre l'action du ressort par introduction du récipient comportant le bouchon ajusté dans l'ouverture, le déplacement de la douille entraînant le commutateur à faire démarrer le pompage de la pompe à travers la soupape.

10. Dispositif selon l'une quelconque des revendications 2 à 9, comprenant en outre un commutateur poussé vers la position débranchée par un ressort en communication avec une douille, la douille pouvant être déplacée contre l'action du ressort par introduction du récipient comportant le bouchon ajusté dans l'ouverture, le déplacement de la douille entraînant le commutateur à faire démarrer l'alimentation du deuxième gaz.

11. Procédé de préservation du contenu d'un récipient de boisson partiellement rempli, comprenant les étapes ci-dessous :
retrait du gaz du récipient jusqu'à l'établissement d'une première pression prédéterminée ; et
amenée d'un gaz inerte dans le récipient jusqu'à l'établissement d'une deuxième pression prédéterminée.

12. Procédé selon la revendication 11, comprenant en outre l'étape d'amenée d'un deuxième gaz dans le récipient jusqu'à l'établissement d'une troisième pression prédéterminée.

13. Bouchon pour une bouteille de vin, le bouchon comportant une bordure destinée à établir l'étanchéité par rapport au goulot d'une bouteille de vin et une soupape bidirectionnelle pouvant être ouverte pour permettre l'écoulement à travers le bouchon dans une direction lors de l'application d'une différence de pression supérieure à un niveau de seuil dans une direction à travers le bouchon et restant fermée lors de l'application d'une différence de pression inférieure audit seuil.

14. Bouchon selon la revendication 13, dans lequel la soupape bidirectionnelle est une soupape à flottement.
